# EUROPEAN PATENT APPLICATION

(11) **EP 1 703 682 A1**
(43) Date of publication of application: **20.09.2006**
(21) Application number: 06003231.5
(22) Date of filing: 17.02.2006
(51) Int. Cl.: H04L 12/56

(54) **Method and apparatus for dynamically distributing data flow in a communication network**

(30) Priority: 14.03.2005 US 661666 P; 23.12.2005 US 317713
(71) Applicant: Alcatel, 75008 Paris (FR)
(72) Inventor: Dietz, Bryan, Lake Forest, CA 92630 (US)
(74) Representative: Schäfer, Wolfgang

(57) **Abstract**

Apparatus, and an associated method, for facilitating communication of data in a multi-stage communication network. A hash value generator generates hash values. A seed value is used in the generation of the hash values. As traffic flow conditions change, feedback is provided, and the seed value is adjusted or changed. And, the manner by which the hash values are generated is changed, responsive to the change of the seed value. Redistribution of traffic flow is provided, thereby to reduce, or compensate for, unbalanced traffic flow in the network.

## Description

The present invention relates generally to a manner by which to facilitate routing of data through a communication network formed of a multi-stage switch fabric. More particularly, the present invention relates to a method, and an associated apparatus, by which to form a hash function that is dynamically reconfigurable responsive to traffic flow conditions in the communication network. By reconfiguring the hash function, unbalanced traffic conditions are corrected, reducing the occurrence of congestion in the communication network.

### Background of the Invention

Public access, and other, telephonic communication networks have been deployed and are available for use throughout significant portions of the world. Many users make regular use of such communication networks through which to communicate data, both voice data and non-voice data. Through appropriate interconnection of communication networks installed to encompass separate geographic areas, communications are effectuable between users positioned at widely disparate locations by way of the interconnected communication networks.

Historically, telephonic communication networks were constructed using circuit-switched technologies in which communication stations between which data is communicated are connected by circuit-switched connections. When a circuit-switched connection is formed, a dedicated connection is provided to the communication stations for the duration of the communication session during which the communication service is provided. By providing the dedicated connection between the communication stations, the connection is maintained irrespective of the amount of data that is communicated and the regularity at which the data is communicated. If data is communicated only intermittently, the dedicated connection is not fully utilized, and the capacity of the communication network is less than optimal.

More recently, communication networks have been constructed that make use of packet switched technologies in which communications are carried out by way of packet switched connections upon packet switched channels. When packet switched communications are utilized, a channel is not dedicated to a single set of communication stations pursuant to a single communication session but, rather, is able to be shared to effectuate communications pursuant to two or more communication sessions. Typically, packet switched communication techniques are utilized by the communication stations in which data that is to be communicated is formatted into data packets and, once formed, the data packets are communicated by way of a packet switched channel. The communication station at which the data packets are originated sometimes referred to as the communication source. And, the communication station to which the data packets are to be delivered is sometimes referred to as the communication destination. Communication networks that utilize packet switched techniques are generally better able fully to utilize the communication capacity of the network in contrast to communication networks that are limited to use of circuit-switched communication techniques.

A communication network that provides for packet switched communications utilize switches through which data is routed to carry out communication of data between a communication source and a communication destination. The switch fabric of a communication network is now sometimes formed of a multi-stage fabric, or switch, chips. When the fabric switch is formed of multiple stages, there generally is more than one path by way of which a data packet can be routed from a source to a destination. That is to say, when the switch fabric forms a multi-stage switch fabric, multiple equivalent paths are formable through the switch fabric between the communication ports to which the communication source and destination are connected.

Generally, the communication network is most efficiently utilized when the data that is to be communicated between the source and destination is distributed evenly across the multiple paths.

Generation of hash values is sometimes provided, and the hash values are used in the selection of the communication paths to be used to communicate data between the communication source and destination. A hash value is calculated by means of a hash function, e.g., for each data packet that is communicated between the communication source and destination pursuant to a communication service. The hash value is sometimes formed using values contained in the packet. The MAC or IP source and destination address values contained in the header part of the packet, e.g., are used in the hash value calculation. As an example, when two paths are available, the hash value, once calculated, is compared against a threshold in order to decide upon which path to route the packet. And, when a larger number of paths are possible, the hash value is compared against a number of thresholds to decide the routing path. Use of hash values in this conventional manner, however, sometimes results in a traffic pattern, i.e., data flow pattern, which is of an unbalanced distribution. That is to say, the data is communicated, not in a manner evenly distributed across the possible communication paths. Instead, the one or more of the communication paths is used more than others. If the unbalanced traffic distribution is significant, network congestion might occur.

A manner that is able better to provide for more equal distribution of traffic in a multi-stage communication network would facilitate improved communications in the network, lessening the communication congestion resulting from the unbalanced traffic distribution.

It is in light of this background information related to communications in a communication network that the significant improvements of the present invention have evolved.

### Summary of the Invention

The present invention, accordingly, advantageously provides apparatus, and an associated method, for facilitating routing of data through a communication network formed of a multi-stage switch fabric.

Through operation of an embodiment of the present invention, a manner is provided to form a hash value that is dynamically configurable responsive to traffic flow conditions in the network.

The hash function is reconfigured responsive to an indication of an unbalanced traffic condition. By reconfiguring the hash function, the traffic distribution is altered, thereby to correct for the unbalanced traffic conditions. By better maintaining the distribution of the communication of data amongst the multiple communication paths, the occurrence of congestion in the network is alleviated, or at least reduced.

In one aspect of the present invention, the manner by which the hash value is generated is dynamically updatable depending upon conditions in the communication network. By providing dynamic changeability to the manner by which the hash value is generated, i.e., by reconfiguring the hash function, unbalanced traffic distribution resulting from the use of a particular hash value is corrected through the changing of the hash value, on subsequent packet transmissions.

In another aspect of the present invention, feedback is provided to the location at which the hash value is generated. The feedback is provided by a node forming part of the communication network, such as a fabric chip, or by the communication destination to which the data is communicated. The feedback is, for instance, contained in the header part of a message that is returned, or otherwise communicated to, the location at which the hash value is generated. The feedback, in one implementation, forms one or more bits populating a header part of a message that is otherwise to be communicated to the communication source or, in another implementation, forms a dedicated message. When populating the header part of a message that otherwise is to be sent during communication operations, additional overhead required to provide the feedback is minimal.

In another aspect of the present invention, a seed value is provided and used in the generation of the hash value. The seed value is stored at a storage element, such as a register maintained at, or connected to, the location, such as a source port, at which the hash value is calculated. The seed value is changeable responsive to indications of communication network conditions, such as indications of traffic flow imbalances, congestion conditions, or other traffic distribution abnormality. When a hash value is to be generated, the seed value stored at the storage element is retrieved and used pursuant to the hash value generation.

The seed value is changed responsive to the indication of the communication network conditions, e.g., by adjusting upwardly or downwardly the seed value responsive to the indication, by calculating a new seed value, or by substituting a substitute seed value for the existing seed value. When substitution is made, the substitute seed value is, e.g., retrieved from a cache of available seed values.

In another aspect of the present invention, generation of the hash value is further dependent upon the address of the communication source, such as the IP (Internet Protocol) address or the MAC (Medium Access Control) layer address of the communication source, the value of which is contained in the header part of the data packet that is to be communicated.

And, in another aspect of the present invention, the generation of the hash value is further responsive to the address of the communication destination, such as the IP address or MAC layer address of the communication destination, the value of which is contained in the header part of the data packet that is communicated.

Responsive to the various input values, including the changeable seed value, the hash values that are generated are not limited to fixed values but, instead, are dynamically changeable responsive to traffic flow conditions in the communication network. Rebalancing of traffic flow, with the generation of the new hash values, is provided. Congestion conditions in the communication network caused by the unbalanced distribution of data communication are thereby corrected. That is to say, responsive to an indication of an unbalanced traffic flow condition, the hash value calculation is altered to cause the calculated hash value to change for a given input indicia. Effectively, change of the seed value changes the algorithmic calculation of the hash value.

In these and other aspects, therefore, apparatus, and an associated method, is provided for a communication device that communicates data by way of a network. A storage element is configured to store a seed value. The seed value that is stored at the storage element is at least selectably responsive to a traffic flow indicia of traffic flow in the network. A hash value generator is adapted to receive data indicia and the seed value stored at the storage element. The hash value generator is configured to generate a hash value based, at least in part, responsive to the data indicia and to the seed value. The hash value is used pursuant to routing of the data through the network.

A more complete appreciation of the present invention and the scope thereof can be obtained from the accompanying drawings that are briefly summarized below, the following detailed description of the presently-preferred embodiments of the present invention and the appended claims.

### Brief Description of the Drawings

Figure 1 illustrates a functional block diagram of a communication network in which an embodiment of the present invention is operable.

Figure 2 illustrates a message sequence diagram representative of exemplary operation of the communication network shown in Figure 1 pursuant to an embodiment of the present invention.

Figure 3 illustrates a method flow diagram listing the method of operation of an embodiment of the present invention.

### Detailed Description

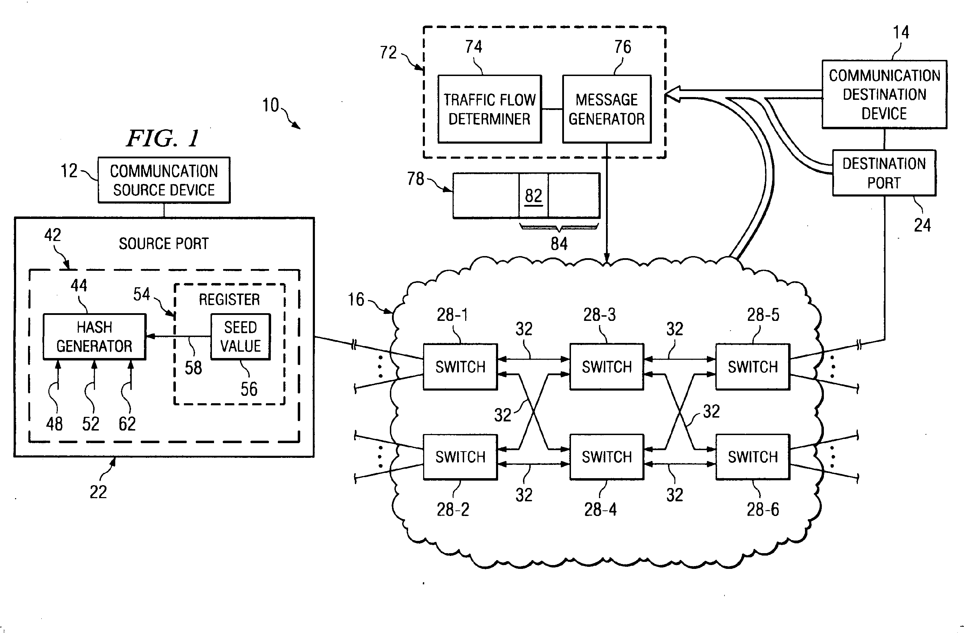

Referring first to Figure 1, a communication network, shown generally at 10, provides for data communications between communication devices, of which the communication device 12 and the communication device 14 are representative. Data originated at, or otherwise provided to, any of the communication devices is communicated by way of the network, here represented by the switch fabric 16, when the communication devices are suitably connected to their respective communication ports. Here, the communication device 12 is connected to the communication port 22, and the communication device 14 is connected to the communication port 24.

For purposes of describing exemplary operation of an embodiment of the present invention, communication operations in which data sourced at the communication device 12 are communicated to the communication device 14 shall be described. And, accordingly, the communication port 22 is identified as a source port, and the communication port 24 is identified as a destination port. Communication of data in the reverse direction and two-way communication of data can analogously be described.

The communication fabric 16 includes physical and functional entities, here shown to include a plurality of fabric chips, or switches, 28, here fabric switches 28-1, 28-2, 28-3, 28-4, 28-5, and 28-6. Three stages of fabric switches are shown in the exemplary network, first-stage fabric switches 28-1 and 28-2, second-stage fabric switches 28-3 and 28-4, and third-stage fabric switches 28-5 and 28-6, all with respect to the source device 12. Various ones of the fabric switches are interconnected, represented by the lines 32. Each of the first stage fabric switches is connected to each of the second stage fabric switches. Each of the second stage fabric switches is connected to each of the third stage fabric switches. Thereby, each of the first stage fabric switches is connected indirectly to a third stage fabric switch by way of a second stage fabric switch. More generally, the switch fabric 16 is representative of a multi-stage, multi-fabric switch fabric. The configuration shown in the figure is merely exemplary. An actual switch fabric is formable of other configurations, e.g., formed of additional stages and numbers of fabric switches and other elements.

The multi-stage nature of the switch fabric provides for a plurality of communication paths by which data packets can be transported between a communication source and a communication destination, here the communication devices 12 and 14, respectively. Generally, to optimize communications, attempts are made to distribute communication of the data packets, forming the data that is to be communicated between the sources and destinations, equally across the available communication paths. For instance, with respect to the exemplary representation shown in Figure 1, the data communicated by the communication device by way of the source port 22 is routable to the destination device 14 by way of more than one communication path. Equal distribution of the data to be communicated upon the different paths is generally preferred to minimize communication congestion in the switch fabric.

Generation of a hash value, as noted previously, for each data packet is sometimes utilized to facilitate routing of data packets through the switch fabric. However, use of the hash values still can result in unequal distribution of data upon the separate available communication paths.

In accordance with an embodiment of the present invention, the manner by which a hash value is generated is changeable responsive to traffic conditions. Changing the hash function results in a new pattern of data flow. Accordingly, an apparatus 42 is provided at the communication port 22 to which the communication source is connected. In other embodiments, the apparatus is positioned elsewhere. The apparatus 42 operates to generate a hash value that is dynamically changeable responsive to traffic flow conditions in the switch fabric. When traffic imbalances are detected, the hash values caused to be generated by the apparatus 42 are changed, thereby to change the distribution of the data flow across the available communication paths.

The apparatus includes a hash generator 44 that operates to generate a hash value. The hash generator, in the exemplary implementation, comprises a hardware or firmware element. The hash value generated by the hash value generator is of a value or characteristic responsive to input indicia provided thereto. In the exemplary implementation, the input indicia include the addresses of the communication source 12 and the communication destination 14. Application of such indicia is indicated by the segments 48 and 52.

The apparatus further includes a storage element 54 that defines a storage register at which a seed value 56 is stored. The seed value is retrieved, or is otherwise made available to the hash generator 46 during its operation to generate a hash value. The line 58 extending between the location of the register at which the seed value is stored represents the input of the seed value to the hash generator. The hash value, once calculated, is determinative of the selection of the communication path, such as on a hop-by-hop basis, by which the data packet is routed through the communication fabric.

Dynamic changeability of the hash value generated by the hash generator is provided by an indication of traffic flow in the switch fabric that is provided to the apparatus 42, here represented by way of the line 62. The indication provided by way of the line 62 to the apparatus, in the exemplary implementation, is determinative of the seed value stored at the register. In one implementation, the indication is used to adjust, upwardly or downwardly, the seed value, such as by way of a value adjustor (not shown). In another implementation, the register forms part of a cache at which a series of seed values are stored, and the indication provided on the line 62 is determinative as to which of the values of the cache is available for use by the generator. And, in another implementation, a seed value calculator (not separately shown) calculates the seed value responsive to the indications provided on the line 62. The change in the seed value, in one implementation, changes the algorithm, that is, mathematical operation performed by the hash value generator. Change of the seed value is equivalent herein to change of the hash algorithm.

The seed value is selectable or updatable, for instance, when the indication provided on the line 62 changes from a prior indication more than a selected amount or rate or is altered at selected intervals, such as periodic intervals, thereby to alter the hash value generated by the hash generator responsive to the traffic flow conditions of the network.

The indication provided on the line 62 is originated at a network location, such as at a switch element 28, at the communication destination 14 or at the destination port 24. In an implementation in which a control element controls operation of the fabric switches, the indication can also be generated by the control element, such as responsive to input indications by the fabric switches. An embodiment of the present invention further comprises apparatus 72 embodied at the switch fabric or destination that determines a traffic flow parameter associated with communication of the data by the communication source pursuant to a communication session across a plurality of communication paths. The apparatus, in one implementation, includes parts that are replicated at different network elements or at a single network element, such as the destination port. The apparatus includes a traffic flow determiner 74 that determines a traffic flow parameter associated with the flow of the data across one or more communication paths. And, the apparatus includes a message generator 76 that generates a message 78 that provides feedback that forms the indication on the line 62. In the exemplary implementation, the traffic flow indicia representative of the traffic flow parameter determined by the determiner populates a field 82 of the header part 84 of the message. The message 78 variously forms a message that otherwise is generated during operation of the communication network or is a dedicated message, that is, a message formed for the sole purpose of providing the feedback indication.

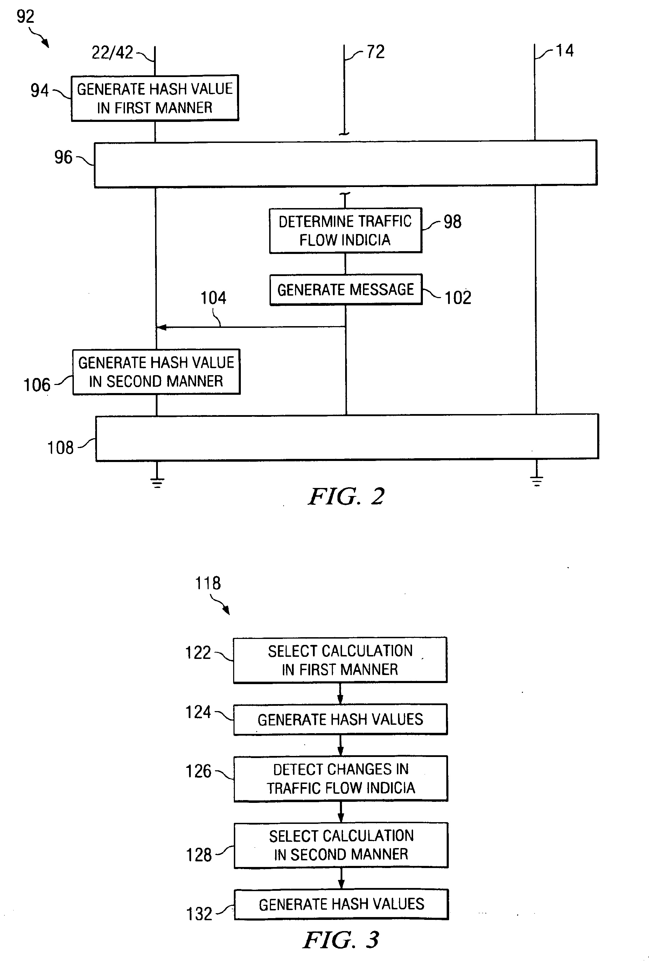

Figure 2 illustrates a message sequence diagram, shown generally at 92, representative of exemplary operation of the communication network shown in Figure 1. Here, the apparatus 42 is co-located with the source port 22 and the apparatus 72 is embodied at, or across, a network element of the communication fabric 16. Communication of data sourced at the communication device 12 for communication to the destination communication device 14 is represented in the figure.

Hash values are calculated, in a first manner, indicated by the block 94, at the apparatus 42. The hash values are used pursuant to selection of which communication path to assign routing of the associated data packets. The block 96 represents communication of data packets whose hash values are calculated in the first manner.

A traffic flow parameter is determined by the apparatus 72, here indicated at the block 98, and a message is formed, indicated at the block 102, that includes indicia of the traffic flow parameter. The message is returned, here indicated by the segment 104, to the apparatus 42 embodied at the source port. And, as indicated by the block 106, a hash value is generated in a second manner, here taking into account the traffic flow conditions in the communication fabric. And, subsequent communications, indicated by the block 108, are carried out using the newly-formed hash value. That is to say, the block 108 represents communication of data packets whose hash values are calculated in the second manner.

Figure 3 illustrates a method flow diagram, shown generally at 118, representative of the method of operation of an embodiment of the present invention. The method facilitates communication of data by a communication device by way of a communication network.

First, and as indicated by the block 122, selection is made to calculate hash values in a first manner, using a hash function configured in a first manner.

Then, and as indicated by the block 124, hash values are generated and used pursuant to routing of data.

Thereafter, and as indicated by the block 126, at least changes in the traffic flow indicia are detected. And, as indicated by the block 128, selection is made to calculate hash values in a second manner. Subsequently, and as indicated by the block 132, hash values are generated, and used pursuant to routing of additional data.

Thereby, through operation of an embodiment of the present invention, an improved manner is provided by which to communicate data in a multi-stage switch fabric. Adjustments are made to the hash value so that better distribution of traffic flow is provided, thereby to alleviate problems resulting from unbalanced traffic flow conditions.

The following method, the following apparatus and the following features, separately or in any combination, may also constitute advantageous embodiments of the described or claimed invention:
- The claimed and/or described apparatus wherein the seed value stored at said storage element is user selectable;
- The claimed and/or described apparatus further comprising a cache of seed values, the seed value stored at said storage element selected from the cache;
- A method for facilitating communication of data by a communication device by way of a communication network, said method comprising the operations of: storing a seed value at least selectably responsive to traffic flow indicia of traffic flow in the network; and generating a hash value based, at least in part, responsive to data indicia and to the seed value stored during said operation of storing, the hash value for use pursuant to routing of the data through the network;
- The claimed and/or described method further comprising the operation of detecting the traffic flow indicia, when delivered to the communication device;
- The claimed and/or described method further comprising the operations of detecting changes in the traffic flow indicia and adjusting the seed value responsive to the changes;
- The claimed and/or described method wherein the data indicia, responsive to which the hash value is generated during said operation of generating, comprises an identification that identifies the communication device;
- The claimed and/or described method wherein the data indicia, responsive to which the hash value is generated during said operation of generating, comprises an identifier that identifies a remote station to which the data is communicated;
- Apparatus for a communication device of a network through which data is communicated to a destination, said apparatus comprising: a traffic flow determiner configured to determine a traffic flow parameter associated with communication of the data through the network; and a message generator adapted to receive an indication of the traffic flow parameter determined by said traffic flow determiner, said message generator configured to generate a message that includes a header part including a traffic flow indicia representative of the traffic flow parameter;
- The claimed and/or described apparatus wherein the message generated by said message generator is returned to a data source that sources the data;
- The claimed and/or described apparatus wherein said message generator is embodied at the destination.

The previous descriptions are of preferred examples for implementing the invention, and the scope of the invention should not necessarily be limited by this description. The scope of the present invention is defined by the following claims.

## Claims

1. Apparatus for a communication device that communicates data by way of a network, said apparatus comprising:
a storage element configured to store a seed value, the seed value stored at said storage element at least selectably responsive to a traffic flow indicia of traffic flow in the network; and
a hash value generator adapted to receive data indicia and the seed value stored at said storage element, said hash value generator configured to generate a hash value based, at least in part, responsive to the data indicia and to the seed value, the hash value used pursuant to routing of the data through the network.

2. The apparatus of claim 1 wherein the seed value stored at said storage element is dynamically updatable responsive to the traffic flow indicia.

3. The apparatus of claim 1 further comprising a traffic flow indicia detector adapted to receive the traffic flow indicia delivered by the network, said traffic flow indicia detector configured to detect the traffic flow indicia and to cause the seed value stored at said storage element to be responsive thereto.

4. The apparatus of claim 3 wherein the traffic flow indicia comprises a feedback message returned to the communication device responsive to earlier communicated data.

5. The apparatus of claim 4 wherein the feedback message comprises a header part and wherein the traffic flow indicia forms part of the header part of the feedback message.

6. The apparatus of claim 1 wherein the traffic flow indicia is indicative of network congestion upon network paths of the network through which the data is communicated.

7. The apparatus of claim 1 wherein the data indicia that said hash value generator is adapted to receive comprises address information.

8. The apparatus of claim 7 wherein the address information forming the data indicia to which said hash value generator is adapted to receive comprises an identifier that identifies the communication device.

9. The apparatus of claim 7 wherein the address information forming the data indicia to which said hash value generator is adapted to receive comprises an identifier that identifies a remote station to which the data is communicated.

10. The apparatus of claim 1 wherein the seed value is adjusted incrementally responsive to change in the traffic flow indicia.

## Amended claims

### Amended claims in accordance with Rule 86(2) EPC.

**1.** Apparatus for a communication device that communicates data by way of a communication network (10), said apparatus (42) comprising:
a storage element (54) configured to store a seed value (56), the seed value stored at said storage element at least selectably responsive to a traffic flow indicia of traffic flow in the network, wherein the traffic flow indicia is indicative of network congestion upon network paths of the network through which the data is communicated, and wherein the seed value stored at said storage element is dynamically updatable; and
a hash value generator (44) adapted to receive data indicia and the seed value stored at said storage element, said hash value generator configured to generate a hash value based, at least in part, responsive to the data indicia and to the seed value, the hash value used pursuant to routing of the data through the network.

**2.** The apparatus of claim 1 further comprising a traffic flow indicia detector adapted to receive the traffic flow indicia delivered by the network, said traffic flow indicia detector configured to detect the traffic flow indicia and to cause the seed value stored at said storage element to be responsive thereto.

**3.** The apparatus of claim 2 wherein the traffic flow indicia comprises a feedback message returned to the communication device responsive to earlier communicated data.

**4.** The apparatus of claim 3 wherein the feedback message comprises a header part and wherein the traffic flow indicia forms part of the header part of the feedback message.

**5.** The apparatus of claim 1 wherein the data indicia that said hash value generator is adapted to receive comprises address information.

**6.** The apparatus of claim 5 wherein the address information forming the data indicia to which said hash value generator is adapted to receive comprises an identifier that identifies the communication device.

**7.** The apparatus of claim 5 wherein the address information forming the data indicia to which said hash value generator is adapted to receive comprises an identifier that identifies a remote station to which the data is communicated.

**8.** The apparatus of claim 1 wherein the seed value is adjusted responsive to the traffic flow indicia.

**9.** The apparatus of claim 1 wherein the seed value is adjusted periodically.

**10.** A method for facilitating communication of data by a communication device by way of a communication network (10), said method comprising the operations of: storing a seed value (56) at least selectably responsive to traffic flow indicia of traffic flow in the network, wherein the traffic flow indicia is indicative of network congestion upon network paths of the network through which the data is communicated, and wherein the seed value stored at said storage element is dynamically updatable; and generating a hash value based, at least in part, responsive to data indicia and to the seed value stored during said operation of storing, the hash value for use pursuant to routing of the data through the network.
